# EUROPÄISCHE PATENTSCHRIFT

(11) **EP 3 592 572 B1**
(45) Veröffentlichungstag und Bekanntmachung des Hinweises auf die Patenterteilung: **16.09.2020**
(21) Anmeldenummer: 18709287.9
(22) Anmeldetag: 26.02.2018
(51) Int. Cl.: B60B 35/00, B60G 7/00, B60B 35/02, B60B 35/04, B60B 35/08

(54) **STUMMELELEMENT UND ACHSSYSTEM**
STUB ELEMENT AND AXLE SYSTEM
ÉLÉMENT FORMANT MOIGNON ET SYSTÈME D'ESSIEU

(30) Priorität: 06.03.2017 DE 102017104554
(43) Veröffentlichungstag der Anmeldung: 15.01.2020
(73) Patentinhaber: SAF-HOLLAND GmbH, 63856 Bessenbach (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2018/054639
(87) Internationale Veröffentlichungsnummer: WO 2018/162266

(56) Entgegenhaltungen:
- EP-A1- 1 209 007
- EP-A1- 2 736 733
- DE-A1- 2 918 562
- DE-A1-102005 029 539
- US-A- 3 865 394

## Beschreibung

Die vorliegende Erfindung betrifft ein Stummelelement und ein Achssystem mit einem Stummelelement.

Radaufhängungen für Räder von Nutzfahrzeugen, insbesondere Einzelradaufhängungen, welche sich eines Achsstummels und eines Längslenkers bedienen, sind aus dem Stand der Technik bekannt. Bei den aus dem Stand der Technik bekannten Achssystemen ist dabei bisher der Achsstummel als sehr kurzes, kompaktes und zumeist als Vollkörper ausgeführtes Bauteil vorgesehen. Aufgrund der Tatsache, dass die axiale Länge des für die Radaufhängung zur Verfügung stehenden Bauraumes nur sehr gering ist, da zwischen den jeweiligen Radaufhängungen weiterer Stauraum, insbesondere für schwere Nutzlasten geschaffen werden soll, sind die aus dem Stand der Technik bekannten Achssysteme zwar sehr kompakt ausgebildet. Sie sind jedoch sehr schwer und insbesondere durch die Vielzahl von erforderlichen Schweißnähten sehr kompliziert und teuer in ihrer Herstellung.

Die Veröffentlichungen DE 10 2005 029 539 A1 und US 3,865,394 A offenbaren Lenkschenkel für Kraftfahrzeuge mit daran festgelegten Stummelelementen, wobei diese Lenkschenkel dafür ausgelegt sind, um eine im Wesentlichen vertikale Achse am Fahrwerk des Kraftfahrzeuges festgelegt zu werden.

Die EP 2 736 733 A1 zeigt ein Fahrwerkssystem eines Nutzfahrzeuges mit einem Längslenker und einem daran mittels Innenhochdruckumformens festlegbaren Achsstummel.

Die DE 29 18 562 A1 offenbart eine Radaufhängung eines Macpherson-Fahrwerkssystems, wobei ein Achsstummel an einem Aufhängungsteil festgeschweißt ist.

Die EP 1 209 007 A1 offenbart ein Verfahren zur Herstellung eines Achssystems umfassend ein Flanschelement und einen Achsstummel, wobei der Achsstummel mittels Reibschweißen an dem Flanschelement festgelegt wird.

Die WO 89/09142 offenbart eine Radaufhängungsanordnung für ein Nutzfahrzeug, bei welcher jeweils ein Achsstummel an einem für eine Einzelradaufhängung ausgelegten Achslenker aufgehängt ist, wobei am Achsstummel ein einzelnes Rad des Nutzfahrzeuges drehbar festgelegt ist.

Aufgabe der vorliegenden Erfindung ist es, ein Stummelelement sowie ein Achssystem bereitzustellen, welche die hohen Anforderungen an die übertragbaren Momente und Kräfte erfüllt und gleichzeitig eine Reduzierung des Gewichts und eine Vereinfachung der Herstellung des Stummelelements sowie des Achssystems erreicht.

Diese Aufgaben werden durch ein Stummelelement gemäß Anspruch 1 sowie ein Achssystem gemäß Anspruch 4 gelöst.

Erfindungsgemäß umfasst das Stummelelement einen Stützbereich und ist im Wesentlichen ebenensymmetrisch zu zwei Ebenen ausgebildet, welche sich in einer Stummelachse schneiden, wobei das Stummelelement zumindest im Bereich des Stützbereiches hohlkörperförmig ausgebildet ist und wobei der Stützbereich eine Stützlänge parallel zur Stummelachse aufweist, die kleiner ist als der mittlere Außendurchmesser des Stützbereiches. Das Stummelelement ist mit anderen Worten ein Achsstummel, welcher ebenensymmetrisch zu mindestens zwei Ebenen ausgebildet ist, die sich in einer Stummelachse schneiden. Das Stummelelement ist somit zumindest mit Rechteckprofil, weiterhin gegebenenfalls auch mit einem geradzahligen Vieleckprofil oder mit einem kreisförmigen oder elliptischen Querschnittsprofil versehen. Es versteht sich, dass auch ein besonders bevorzugtes kreisförmiges Hohlzylinderprofil ebenensymmetrisch zu zumindest zwei Ebenen, nämlich zu unendlich vielen Ebenen, die sich in der Stummelachse schneiden, ausgebildet ist. Im Wesentlichen bedeutet dabei im vorliegenden Fall, dass kleinere Abweichungen von dieser Ebenensymmetrie am Stummelelement im Rahmen der Erfindung vorgesehen sein können, beispielsweise Versorgungskanäle für Luftleitungen oder Hydraulikleitungen, oder beispielsweise einzelne Festlegungsgeometrien zur Festlegung weiterer Bauteile am Stummelelement. Die kraftübertragenden Abschnitte des Stummelelements, welche die Gewichtskraft des Nutzfahrzeuges auf das Fahrzeugrad übertragen, sind dabei vorzugsweise ebenensymmetrisch oder bevorzugt rotationssymmetrisch um die Stummelachse ausgebildet. Der Stützbereich des Stummelelements ist der Bereich, in welchem das Stummelelement an einem Achssystem festlegbar ist. Zumindest im Bereich des Stützbereiches ist das Stummelelement dabei hohlkörperförmig ausgestattet, das heißt, dass durch seine Wand ein gewisses Volumen umschlossen oder begrenzt wird, wobei das Stummelelement vorzugsweise zu einer Seite längs der Stummelachse hin offen ist. Weiterhin weist der Stützbereich eine Stützlänge, das heißt eine Erstreckung des Stützbereiches parallel zur Stummelachse auf, die kleiner ist als der mittlere Außendurchmesser des Stützbereiches. Dank diesem Merkmal löst die vorliegende Erfindung eine wesentliche Aufgabe des Stummelelements, nämlich dass dieses in axialer Richtung bzw. parallel zur Stummelachse, eine besonders kompakte Bauweise aufweisen soll und insbesondere eine geringe Erstreckung aufweisen soll. Um dennoch einen ausreichend großen Kraftübertragungsbereich zwischen dem Stummelelement und dem Achssystem bereitzustellen, ist es erfindungsgemäß vorgesehen, dass der mittlere Außendurchmesser des Stützbereiches, in welchem eine Kraft vom Achssystem auf das Stummelelement übertragen werden kann, stets größer ist als die Stützlänge des Stützbereiches. Es hat sich gezeigt, dass auf diese Weise insbesondere das Flächenträgheitsmoment in dem Verbindungsbereich zwischen dem Achssystem und dem Stummelelement besonders hoch gehalten werden kann, wodurch bei großen Kräften und Biegemomenten die im Material auftretenden Spannungen gering gehalten werden können. Gleichzeitig ist die Gesamtlänge des Stummelelements durch den besonders kurzen Stützbereich sehr kompakt. Hierdurch ist insbesondere bei einer vorgegebenen maximalen Breite eines mit dem Stummelelement ausgestatteten Nutzfahrzeuges der zwischen den Radaufhängungen des Achssystems vorgesehene Laderaum besonders breit. Der mittlere Außendurchmesser ist definiert als der Mittelwert aller Abstände zwischen der Stummelachse und der Außenfläche des Stummelelements im Stützbereich, gemessen in einer senkrecht zur Stummelachse stehenden Ebene. Bei einer im Querschnitt kreisförmigen Geometrie ist verständlicherweise der mittlere Außendurchmesser gleich dem Außendurchmesser der Außenkontur. Bei einer rechteckigen oder vieleckigen Kontur des Stützbereiches ist der mittlere Außendurchmesser definiert als der Mittelwert aus allen Abständen der jeweiligen Außenfläche von der Stummelachse in einer orthogonal zur Stummelachse liegenden Ebene. Der mittlere Innendurchmesser des Stützbereiches ist analog hierzu definiert.

Mit Vorteil steht die Stützlänge in einem Verhältnis von 0,3 bis 0,7, vorzugsweise von 0,35 bis 0,5 zum mittleren Außendurchmesser des Stützbereiches. Das Verhältnis zwischen der Stützlänge und dem mittleren Außendurchmesser im Bereich von 0,3 bis 0,7 hat sich dabei insbesondere in Bezug auf große Flächenträgheitsmomente bei gleichzeitig geringer Bauraumbeanspruchung durch das Stummelelement als vorteilhaft erwiesen. Bei dem kleinsten Verhältniswert von 0,3 ist die Stützlänge sehr kurz im Vergleich zum Außendurchmesser des Stützbereiches. Dieses Verhältnis kann insbesondere bei sehr kurzen und mit großem Durchmesser ausgestatteten Stummelelementen zum Einsatz gelangen, wobei hier insbesondere Spezialanwendungen, welche nicht auf genormte Außendurchmesser des Stummelelements beschränkt sind, den Vorteil der besonders geringen Länge des Achsstummels ausnutzen können. Bei dem größten Verhältnis von 0,7 ist der Außendurchmesser des Stützbereiches vergleichsweise klein, wodurch insbesondere Standardradaufhängungen an einem Stummelelement gemäß der vorliegenden Erfindung festlegbar sind. Als besonders günstiger Bereich hat sich das Verhältnis von 0,35 bis 0,5 bewährt, wobei in diesem Bereich insbesondere ein guter Kompromiss aus einer vielseitigen Anwendbarkeit des Stummelelements und einer andererseits guten Bauraumausnutzung bei gleichzeitig ausreichend großen Flächenträgheitsmomenten im Kraftübertragungsbereich zwischen dem Stummelelement und dem Achssystem erreicht werden kann. Der Außendurchmesser, bzw. der mittlere Außendurchmesser, des Stummelelements im Stützbereich liegt vorzugsweise bei 110 bis 160 mm, insbesondere bevorzugt bei 130 bis 150 mm und in einer besonders bevorzugten Ausführungsform von 140 bis 148 mm. Insbesondere bevorzugt ist der Außendurchmesser des Stummelelements zumindest im Stützbereich größer als 100 mm, da auf diese Weise ein höheres Flächenträgheitsmoment bei gleichzeitig geringerem Gewicht erzielt werden kann als bei einem relativ geringen Durchmesser von nur 100 mm. Durch die Erweiterung des Außendurchmessers des Stummelelements und die hohlkörperförmige Ausbildung des Stummelelements wird dessen Gewicht deutlich reduziert und gleichzeitig die im Stummelelement vorhandenen Widerstandsmomente und Flächenträgheitsmomente erhöht. Für eine kompakte Bauweise des Stummelelements ist es weiterhin vorteilhaft, wenn die Stützlänge in Verhältnis von 0,2 bis 0,6 zur Gesamtlänge des Stummelelements entlang der Stummelachse steht. Das Stummelelement weist somit keine Abschnitte auf, die anderen als den grundlegend erforderlichen Funktionen der Festlegung an einem Haltelement und der Lagerung eines Bremsträgers und eines Fahrzeugrades dienen. Hierdurch kann das Gewicht des Stummelelements minimal ausgelegt werden.

Erfindungsgemäß weist das Stummelelement im Stützbereich einen mittleren Innendurchmesser auf, der ein 0,5- bis 0,95-faches, vorzugsweise ein 0,75- bis 0,92-faches und besonders bevorzugt ein 0,85- bis 0,9-faches des mittleren Außendurchmessers des Stützbereiches ist. Das Verhältnis des Innendurchmessers zum Außendurchmesser ist ein Ausdruck für die Wandstärke des Stummelelements im entsprechenden Bereich. Dabei darf die Wandstärke nicht zu gering sein, um ein ausreichend hohes Flächenträgheitsmoment beibehalten zu können. Je geringer jedoch die Wandstärke ist, desto geringer ist auch das Gewicht des Stummelelements. Es hat sich gezeigt, dass in einem Bereich von 0,5 bis 0,95 deutliche Verbesserungen gegenüber den aus den Stand der Technik bekannten Achsstummeln erzielt werden können. Im besonders bevorzugten Bereich von 0,75 bis 0,92 kann bereits das Gewicht gegenüber den aus dem Stand der Technik bekannten Achsstummeln um bis zu 10% reduziert werden. Bei dem insbesondere bevorzugten Bereich von 0,85 bis 0,9 ist das Verhältnis von Flächenträgheitsmoment zu Gewicht derart optimiert, dass die mit diesem Verhältnis ausgestattetem Stummelemente insbesondere in Spezialanwendungsfahrzeugen zum Transport großer Lasten Anwendung finden können.

Erfindungsgemäß ist ein Achssystem vorgesehen, welches ein Stummelelement und ein Halteelement umfasst, wobei das Stummelelement einen Stützbereich aufweist, in welchem es an einem Haltebereich des Halteelements festlegbar oder festgelegt ist, wobei das Stummelelement im Wesentlichen ebenensymmetrisch zu zwei Ebenen ausgebildet ist, welche sich in einer Stummelachse schneiden und wobei das Stummelelement zumindest im Bereich des Stützbereiches hohlkörperförmig ausgebildet ist. Das Achssystem ist vorzugsweise die Radaufhängung an einem Schwerlastnutzfahrzeug. Dieses weist ein Stummelelement und ein Halteelement auf, wobei das Halteelement vorzugsweise als Längslenker oder sogenannte Achsschwinge ausgebildet ist. Das Stummelelement weist einen Stützbereich auf, in welchem es am Halteelement in einem Haltebereich festlegbar ist. Insbesondere bevorzugt ist dabei der Stützbereich dafür ausgelegt, am Haltebereich in zumindest teilweisen formschlüssigen Eingriff zu gelangen. In einer anderen Ausführungsform ist der Stützbereich eine entsprechende Kontaktfläche, welche speziell dafür ausgelegt ist, mittels eines Reibschweißverfahrens an dem korrespondierend dazu ausgebildeten Haltebereich des Halteelements festgelegt zu werden. Wie bereits zuvor beschrieben ist das Stummelelement im Wesentlichen ebenensymmetrisch zu zwei Ebenen ausgebildet, welche sich in der Stummelachse schneiden. Im Wesentlichen bedeutet dabei im vorliegenden Fall, dass kleinere Abweichungen von dieser Ebenensymmetrie am Stummelelement im Rahmen der Erfindung vorgesehen sein können, beispielsweise Versorgungskanäle für Luftleitungen oder Hydraulikleitungen, oder einzelne Festlegungsgeometrien zur Festlegung weiterer Bauteile am Stummelelement. Die kraftübertragenden Abschnitte des Stummelelements, welche die Gewichtskraft des Nutzfahrzeuges auf das Fahrzeugrad übertragen, sind dabei vorzugsweise ebenensymmetrisch oder darüber hinaus bevorzugt rotationssymmetrisch um die Stummelachse ausgebildet. Zumindest im Stützbereich ist das Stummelelement dabei hohlkörperförmig ausgebildet. An dem, dem Stützbereich gegenüberliegend angeordneten distalen Ende, ist das Stummelelement massiv ausgebildet.

Erfindungsgemäß ist das Achssystem eine Einzelradaufhängung, wobei das Stummelelement eine parallel zur Stummelachse gemessene Stummellänge aufweist, wobei der Verbund aus Halteelement und Stummelelement eine parallel zur Stummelachse gemessene Achssystemlänge aufweist, wobei das Verhältnis der Stummellänge zur Achssystemlänge zwischen 0,7 und 1, und bevorzugt zwischen 0,85 und 1 liegt. Mit Vorteil sind das Stummelelement und das Halteelement Teil einer Einzelradaufhängung. Insbesondere bevorzugt ist dabei am Achssystem und insbesondere am Stummelelement keine starre Achse mittelbar oder unmittelbar verbunden, welche zwei gegenüberliegend am Nutzfahrzeug angeordnete Stummelelemente miteinander verbindet. Die Einzelradaufhängung hat den Vorteil, dass zwischen den, auf den verschiedenen Seiten des Nutzfahrzeuges angeordneten Einzelradaufhängungen Stauraum für Nutzlast vorhanden ist. Insbesondere an einer Einzelradaufhängung kann die vorliegende Erfindung dabei durch ihre kompakte Auslegung bei gleichzeitig großen übertragbaren Momenten und Kräften ihre beste vorteilhafte Wirkung entfalten. Besonders bevorzugt ragt das Stummelelement an dem Ende, an welchem auch der Stützabschnitt angeordnet ist, nicht aus dem Haltebereich des Haltelements heraus. Mit anderen Worten ragt das Stummelelement nicht durch das Halteelement hindurch, sondern die offene Seite des Stummelelements schließt bei maximaler Überlappung zwischen Stummelelement und Halteelement mit der Außenfläche des Haltelements ab. Auch hierdurch lässt sich die kompakte Bauweise erreichen, da die Erstreckung parallel zur Stummelachse des Verbundes aus Stummelelement und Halteelement besonders gering gehalten ist. Bevorzugt ist die Stummellänge nur wenig kürzer als die Gesamtlänge des Achssystems entlang der Stummelachse. Hierdurch wird bei kleinstmöglicher Gesamtlänge des Achssystems der Überlappungsbereich zwischen dem Stummelelement und dem Halteelement maximiert und es können mit dem gleichzeitig kompakten Achssystem größtmögliche Kräfte und Momente übertragen werden. Der Verhältnisbereich von 0,7 und 1 der Stummellänge zur Achssystemlänge hat sich dabei als am einfachsten herzustellen erwiesen und erfüllt die Anforderungen an die Kompaktheit und die übertragbaren Kräfte.

Erfindungsgemäß ist das Halteelement ein Längslenker eines Nutzfahrzeuges, welcher schwenkbar um eine Parallele zur Stummelachse am Rahmen des Nutzfahrzeuges festgelegt ist. Besonders bevorzugt ist es also, dass das Stummelelement am Längslenker eines Nutzfahrzeuges festgelegt ist, wobei beispielsweise über eine Luftfeder oder eine Achsliftvorrichtung verschiedene zusätzliche Systeme am Längslenker angreifen und somit die Radposition mittelbar über das Stummelelement einstellen können.

Bevorzugt ist das Stummelelement stoffschlüssig am Halteelement festlegbar oder festgelegt. Eine stoffschlüssige Verbindung ist im Rahmen der vorliegenden Erfindung insbesondere deshalb bevorzugt, weil mit ihr die größten Kräfte bei gleichzeitig dem geringsten konstruktiven Aufwand übertragbar sind. Weiterhin ist eine stoffschlüssige Verbindung eine dauerhafte Verbindung, welche auch bei großen Lebensdauerzyklen eine ausreichend hohe Dauerfestigkeit aufweist. Dabei kann zusätzlich zum Stoffschluss auch ein Kraftschluss zwischen dem Halteelement und dem Stummelelement erzeugt werden, indem das Halteelement im Haltebereich erwärmt, teilweise oder vollständig auf das Stummelelement bzw. den Stützbereich des Stummelelements aufgeschoben wird und anschließend abgekühlt wird. In diesem Zusammenhang kann somit die stoffschlüssige Verbindung, welche anschließend hergestellt wird, durch einen zusätzlichen Kraftschluss unterstützt werden.

Insbesondere bevorzugt kann das Stummelelement dabei durch Reibschweißen am Halteelement festgelegt werden. Das Reibschweißen zeichnet sich dadurch aus, dass bei relativ geringen Schweißtemperaturen eine vollständige Aufschmelzung des jeweiligen Materials der beiden Bauteile im Kontaktbereich hergestellt werden kann, wodurch eine vollflächige Verbindung zwischen dem Stummelelement und dem Halteelement herstellbar ist, bei gleichzeitig geringeren Materialspannungen, als dies beim Lichtbogenschweißen der Fall ist.

Erfindungsgemäß ist der Haltebereich als Aussparung ausgebildet, wobei der Stützbereich in den Haltebereich eingeführt und stoffschlüssig am Haltebereich festgelegt ist. Auf besonders einfache Weise kann durch die Ausbildung des Haltebereiches als Aussparung zur Montage des Stützelements am Halteelement ein zumindest temporärer Formschluss zwischen beiden Bauteilen erreicht werden. Durch das Einsetzen des Stützelements in den Haltebereich kann dieses dort festgelegt und fixiert werden, wobei anschließend eine stoffschlüssige Verbindung, insbesondere bevorzugt eine Schweißverbindung zwischen beiden Bauteilen, hergestellt werden kann. Die Montage des Achssystems erleichtert sich auf diese Weise erheblich. Darüber hinaus tragen der Formschluss und insbesondere die Überlappung des Stützelements und des Halteelements im Haltebereich und Stützbereich zur Kraft- und Momentübertragung unterstützend bei.

Erfindungsgemäß weist das Halteelement im Bereich des Haltebereiches eine Breite auf, wobei der Stützbereich eine Stützlänge parallel zur Stummelachse aufweist, und wobei die Stützlänge in einem Verhältnis von kleiner-gleich 0,8 und vorzugsweise von 0,3 bis 0,7, vorzugsweise 0,5 bis 0,65, zur Breite steht. Mit anderen Worten ist somit das Stützelement nicht auf der gesamten Breite des Halteelements in den Haltebereich eingeschoben. Der Vorteil dieser Ausführungsform ist, dass durch die geringere Überlappung zwischen Halteelement und Stützelement das Gewicht des Achssystems bei gleicher Bauraumbeanspruchung reduziert werden kann. Weiterhin ist bevorzugt die Verbindungsschweißnaht am distalen Ende des Stützelements nicht an einer der Außenkanten des Halteelements vorgesehen, sondern befindet sich im Inneren in dem als Aussparung ausgebildeten Haltebereich. Auf diese Weise kann ein Schweißen im Kantenbereich des Halteelements vermieden werden, wodurch insbesondere der Einbrand und die Gefahr von Rissen durch Thermospannungen im Kantenbereich vermieden werden kann. Besonders bevorzugt ist dabei der Verhältnisbereich von 0,4 bis 0,6, insbesondere 0,5 bis 0,6, wobei das Stützelement zumindest bis zur Hälfte der Breite des Halteelements eingeschoben ist und Momente hier übertragen werden können, gleichzeitig aber ein ausreichender Abstand zur gegenüberliegenden Außenkante am Halteelement vorgesehen ist und somit ungünstige Kerbwirkung im Kantenbereich durch auftretende Thermospannungen vermieden werden kann.

Besonders bevorzugt weist der Haltebereich eine Anschlagfläche auf, welche dafür ausgelegt ist, das Stummelelement parallel zur Stummelachse abzustützen, wobei das Stummelelement an der Anschlagfläche oder angrenzend an die Anschlagfläche stoffschlüssig festlegbar ist. Der Anschlag weist vorzugsweise einen nach innen ragenden Vorsprung auf, an welchem das Stummelelement beim Einschieben in den Haltebereich sich abstützend zur Anlage bringbar ist. In diesem Fall kann der Vorsprung am Haltebereich gleichfalls als Schweißmaterial verwendet werden, um eine Schweißverbindung zwischen dem Haltebereich und dem Stummelelement herzustellen. In einer alternativ bevorzugten Ausführungsform ist der Haltebereich nicht als durchgehende Bohrung oder Aussparung am Halteelement ausgeführt, sondern lediglich als Vertiefung, wobei die Grundfläche der Vertiefung in diesem Fall eine Anschlagfläche definiert, an welcher das Stummelelement insbesondere bevorzugt mittels eines Reibschweißverfahrens festgelegt werden kann.

Insbesondere bevorzugt ist ein Dichtungselement vorgesehen, welches derart am Stummelelement oder am Halteelement festlegbar ist, dass es das offene Ende des Stummelelements gegenüber Umwelteinflüssen schützt. Das Dichtungselement ist dabei vorzugsweise eine Art Deckel, welche vorgesehen ist, das offene Ende des Stummelelements gegen Umwelteinflüsse abzuschirmen. Es kann auf diese Weise die Gesamtlebensdauer des Achssystems deutlich erhöht werden, da Gefahr von Korrosion oder Verschmutzung und Materialabrieb vermieden werden kann. Das Dichtungselement ist dabei mit Vorteil ein flacher Körper, dessen Erstreckung entlang der Stummelachse im eingebauten Zustand kleiner als ein 0,3-faches der Erstreckung quer zur Stummelachse ist. Besonders bevorzugt ragt das Dichtungselement im eingebauten Zustand nur mit einem maximal 0,2-fachen der Breite des Halteelements aus diesem heraus, um auf diese Weise die Achssystemlänge nicht Wesentlich zu vergrößern.

Weitere Vorteile und Merkmale der vorliegenden Erfindung ergeben sich aus der nachfolgenden Beschreibung mit Bezug auf die beigefügten Figuren. Es versteht sich, dass einzelne nur in einer Ausführungsform gezeigte Merkmale auch in Ausführungsformen anderer Figuren Anwendung finden können, sofern sich dies nicht aufgrund technischer Gegebenheiten verbietet oder explizit ausgeschlossen wurde.

Es zeigen:
- Fig. 1: eine schematische Seitenansicht eines Achssystems an einem Nutzfahrzeug;
- Fig. 2: eine Schnittansicht einer ersten bevorzugten Ausführungsform des erfindungsgemäßen Achssystems;
- Fig. 3: eine zweite bevorzugte Ausführungsform eines erfindungsgemäßen Achssystems; und
- Fig. 4: eine Schnittansicht einer bevorzugten Ausführungsform eines erfindungsgemäßen Stummelelements.

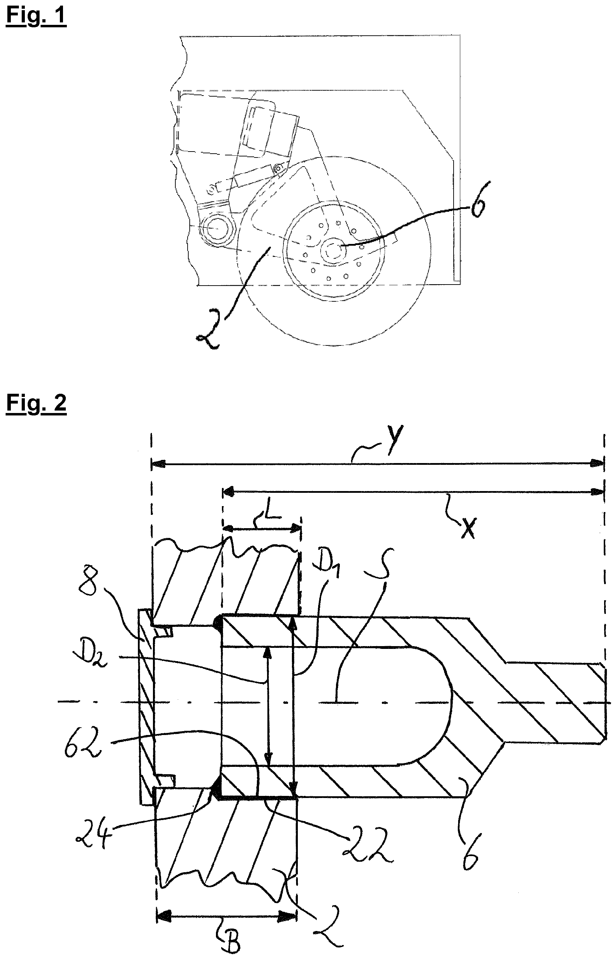

Fig. 1 zeigt die Einzelradaufhängung eines Nutzfahrzeuges, welche insbesondere ein Achssystem gemäß der vorliegenden Erfindung einsetzt. Dabei ist das Halteelement 2 als Längslenker ausgebildet, welcher an seinem in der Figur linken Ende schwenkbar am Rahmen des Nutzfahrzeuges festlegbar ist. Am Halteelement 2 festgelegt ist das Stummelelement 6, an welchem wiederum ein Fahrzeugrad drehbar lagerbar ist.

Fig. 2 zeigt eine Schnittansicht durch den Verbindungsbereich zwischen dem Halteelement 2 und dem Stummelelement 6. Das Stummelelement 6 ist dabei mit seinem Stützbereich 62 in den Haltebereich 22 des Halteelements 2 eingeschoben. Am distalen Ende des Stummelelements 6 ist eine Schweißnaht zwischen dem Stummelelement bzw. dem Stützbereich des Stummelelements 6 und dem Haltebereich 22 hergestellt. Weiterhin ist gezeigt, dass der mittlere Außendurchmesser D₁ des Stützbereiches 62 vorzugsweise ein 0,85-faches des mittleren Innendurchmessers D₂ des Stützbereiches 62 ist. Weiterhin ist das Stummelelement 6 nicht vollständig durch den als Aussparung ausgebildeten Haltebereich 22 hindurchgesteckt, sondern nur bis zum ca. 0,3- bis 0,7-fachen, vorzugsweise 0,5- bis 0,65-fachen der Breite B des Halteelements 2 in diesem Bereich. Die Stützlänge L ist somit 0,3- bis 0,7-faches, vorzugsweise 0,5- bis 0,65-faches der Breite B des Halteelements 2 auf Höhe des Haltebereiches 62. Vorzugsweise sind sowohl das Stummelelement 6 als auch der Haltebereich 22 rotationssymmetrisch um eine Stummelachse S ausgebildet. Weiterhin sind die Stummellänge X und die Achssystemlänge Y gezeigt, welche in einem bevorzugten Verhältnis von 0,85 zueinander stehen. Das offene Ende des Stummelelements 6 ist durch ein Dichtungselement 8 verschlossen, welches im vorliegenden Fall am Halteelement 2 angreift und auf diese Weise auch den gesamten Haltebereich 22 abdichtet. Es versteht sich, dass das Dichtungselement 8 auch unmittelbar am Stummelelement 6 festgelegt sein kann. Das Dichtungselement 8 ist bevorzugt scheibenförmig ausgelegt und ragt möglichst nicht mehr als mit dem 0,2-fachen der Breite B aus dem Haltelement 2 heraus.

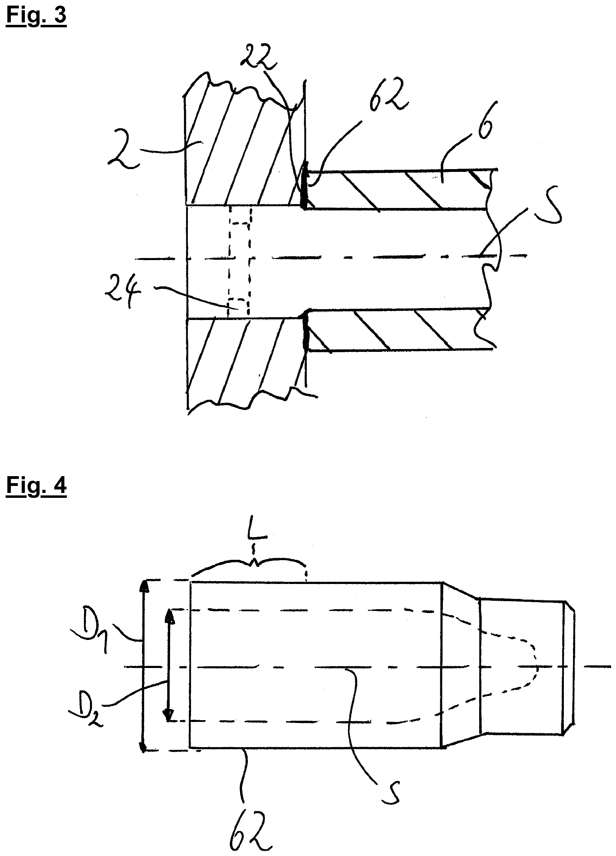

Fig. 3 zeigt eine alternative Ausführungsform eines erfindungsgemäßen Achssystems, wobei das Stummelelement 6 mittels eines Reibschweißverfahrens an das Halteelement 2 angeschweißt ist. Dabei findet bei dem dort gezeigten Beispiel keine Überlappung zwischen dem Stummelelement und dem Halteelement statt. Alternativ zu der in Fig. 3 dargestellten Ausführungsform könnte das Stummelelement 6 mit einem geringeren Durchmesser ausgestattet sein und beispielsweise an dem im Haltebereich 22 angeordneten Anschlag 24 (gestrichelt) zur Anlage gelangen und dort mittels Reibschweißen festgelegt werden.

Fig. 4 zeigt eine bevorzugte Ausführungsform des erfindungsgemäßen Stummelelements 6, wobei insbesondere die geometrischen Verhältnisse am Stummelelement 6 dargestellt sind. Das Stummelelement 6 ist überwiegend hohl ausgeführt und zu einer Seite hin offen. Im Abschnitt mit dem größten Durchmesser ist der Stützbereich 62 angeordnet, welcher eine Stützlänge L aufweist, die kleiner ist als der Außendurchmesser D₁ in diesem Bereich. Der Außendurchmesser D₁ und der Innendurchmesser D₂ sind im Stützbereich 62 konstant, wobei sich beide Durchmesser (D₁, D₂) außerhalb des Stützbereiches 62 ändern können.

### Bezugszeichenliste:

- 2 -: Halteelement
- 6 -: Stummelelement
- 8 -: Dichtungselement
- 22 -: Haltebereich
- 24 -: Anschlag
- 62 -: Stützbereich
- B -: Breite des Haltelements
- D₁ -: mittlerer Außendurchmesser
- D₂ -: mittlerer Innendurchmesser
- L -: Stützlänge
- S -: Stummelachse
- X -: Stummellänge
- Y -: Achssystemlänge

## Patentansprüche

1. Stummelelement (6) zum Einsatz in einem Achssystem,
wobei das Stummelelement (6) einen Stützbereich (62) aufweist,
wobei das Stummelelement (6) im Wesentlichen ebenensymmetrisch zu zwei Ebenen ausgebildet ist, welche sich in einer Stummelachse (S) schneiden, wobei das Stummelelement (6) zumindest im Bereich des Stützbereiches (62) hohlkörperförmig ausgebildet ist,
wobei der Stützbereich (62) eine Stützlänge (L) parallel zur Stummelachse (S) aufweist, die kleiner ist als der mittlere Außendurchmesser (D₁) des Stützbereiches (62),
**dadurch gekennzeichnet, dass** das Stummelelement (6) im Stützbereich (62) einen mittleren Innendurchmesser (D₂) aufweist, der ein 0,75- bis 0,92-faches des mittleren Außendurchmessers (D₁) des Stützbereiches (62) ist.

2. Stummelelement (6) nach Anspruch 1,
wobei die Stützlänge (L) in einem Verhältnis von 0,3 bis 0,7, vorzugsweise von 0,35 bis 0,5 zum mittleren Außendurchmesser (D₁) des Stützbereiches (62) steht.

3. Stummelelement (6) nach einem der Ansprüche 1 oder 2,
wobei der mittlere Innendurchmesser (D₂) ein 0,85- bis 0,9-faches des mittleren Außendurchmessers (D₁) des Stützbereiches (62) ist.

4. Achssystem, insbesondere zum Einsatz in einem Nutzfahrzeug, umfassend ein Stummelelement (6) und ein Halteelement (2),
wobei das Stummelelement (6) einen Stützbereich (62) aufweist, in welchem es an einem Haltebereich (22) des Halteelements (2) festlegbar oder festgelegt ist,
wobei das Stummelelement (6) im Wesentlichen ebenensymmetrisch zu zwei Ebenen ausgebildet ist, welche sich in einer Stummelachse (S) schneiden, wobei das Stummelelement (6) zumindest im Bereich des Stützbereiches (62) hohlkörperförmig ausgebildet ist,
wobei das Achssystem eine Einzelradaufhängung ist,
**dadurch gekennzeichnet, dass** das Halteelement (2) ein Längslenker eines Nutzfahrzeuges ist,
welcher schwenkbar um eine Parallele zur Stummelachse (S) am Rahmen des Nutzfahrzeuges festgelegt ist,
wobei das Stummelelement (6) eine parallel zur Stummelachse (S) gemessene Stummellänge (X) aufweist,
wobei der Verbund aus Halteelement (2) und Stummelelement (6) eine parallel zur Stummelachse (S) gemessene Achssystemlänge (Y) aufweist,
wobei das Verhältnis der Stummellänge (X) zur Achssystemlänge (Y) zwischen 0,7 und 1 liegt,
wobei der Haltebereich (22) als Aussparung ausgebildet ist,
wobei der Stützbereich (62) in den Haltebereich (22) eingeführt und stoffschlüssig festgelegt ist,
wobei das Halteelement (2) im Bereich des Haltebereiches (22) eine Breite (B) aufweist,
wobei der Stützbereich (62) eine Stützlänge (L) parallel zur Stummelachse (S) aufweist,
wobei die Stützlänge (L) in einem Verhältnis von kleiner gleich 0,8 zur Breite (B) steht.

5. Achssystem nach Anspruch 4,
wobei das Verhältnis der Stummellänge (X) zur Achssystemlänge (Y) zwischen 0,85 und 1 liegt.

6. Achssystem nach einem der Ansprüche 4 oder 5,
wobei das Stummelelement (6) stoffschlüssig am Halteelement (2) festlegbar oder festgelegt ist.

7. Achssystem nach Anspruch 6,
wobei das Stummelelement (6) am Halteelement (2) reibgeschweißt festgelegt ist.

8. Achssystem nach einem der vorhergehenden Ansprüche,
wobei die Stützlänge (L) in einem Verhältnis von 0,3 bis 0,7 zur Breite (B) steht.

9. Achssystem nach einem der Ansprüche 4 bis 8,
wobei der Haltebereich (22) eine Anschlagfläche (24) aufweist, welche dafür ausgelegt ist, das Stummelelement (6) parallel zur Stummelachse (S) abzustützen,
wobei das Stummelelement (6) an der Anschlagfläche (24) oder angrenzend an die Anschlagfläche (24) stoffschlüssig festlegbar ist.

10. Achssystem nach einem der Ansprüche 4 bis 9,
wobei ein Dichtungselement (8) vorgesehen ist, welches derart am Stummelelement (6) oder am Halteelement (2) festlegbar ist, dass es das offene Ende des Stummelelements (6) gegenüber Umwelteinflüssen schützt.

## Claims

1. A stub element (6) for use in an axle system,
wherein the stub element (6) has a support region (62), wherein the stub element (6) is formed substantially plane-symmetrically to two planes which intersect in a stub axis (S),
wherein the stub element (6) is formed as a hollow body at least in the region of the support region (62),
wherein the support region (62) has a support length (L) parallel to the stub axis (S) which is smaller than the mean outer diameter (D₁) of the support region (62),
**characterized in that** the stub element (6) in the support region (62) has a mean inner diameter (D₂) which is 0.75 to 0.92 times the mean outer diameter (D₁) of the support region (62).

2. The stub element (6) according to claim 1,
wherein the support length (L) is in a ratio of 0.3 to 0.7, preferably of 0.35 to 0.5, to the mean outer diameter (D₁) of the support region (62).

3. The stub element (6) according to one of claims 1 or 2,
wherein the mean inner diameter (D₂) is 0.85 to 0.9 times the mean outer diameter (D₁) of the support region (62).

4. An axle system, in particular for use in a utility vehicle, comprising a stub element (6) and a holding element (2),
wherein the stub element (6) has a support region (62) in which it can be or is fixed to a holding region (22) of the holding element (2),
wherein the stub element (6) is designed substantially plane-symmetrically to two planes, which intersect in a stub axis (S),
wherein the stub element (6) is of hollow-body design at least in the region of the support region (62),
wherein the axle system is an independent wheel suspension, **characterized in that** the holding element (2) is a trailing arm of a utility vehicle,
which is fixed to the frame of the utility vehicle so as to be pivotable about a parallel to the stub axis (S),
wherein the stub element (6) has a stub length (X) measured parallel to the stub axis (S),
wherein the composite of holding element (2) and stub element (6) has an axle system length (Y) measured parallel to the stub axis (S),
wherein the ratio of the stub length (X) to the axle system length (Y) is between 0.7 and 1,
wherein the holding region (22) is designed as a recess,
wherein the support region (62) is inserted into the holding region (22) and is fixed in place with a material bond,
wherein the holding element (2) has a width (B) in the region of the holding region (22),
wherein the support region (62) has a support length (L) parallel to the stub axis (S),
wherein the support length (L) is in a ratio of less than or equal to 0.8 to the width (B).

5. The axle system according to claim 4,
wherein the ratio of the stub length (X) to the axle system length (Y) is between 0.85 and 1.

6. The axle system according to one of claims 4 or 5,
wherein the stub element (6) can be fixed or is fixed to the holding element (2) with a material bond.

7. The axle system according to claim 6,
wherein the stub element (6) is friction-welded to the holding element (2).

8. The axle system according to any one of the preceding claims,
wherein the support length (L) is in a ratio of 0.3 to 0.7 to the width (B).

9. The axle system according to any one of claims 4 to 8,
wherein the holding region (22) has a stop surface (24) which is designed to support the stub element (6) parallel to the stub axis (S),
wherein the stub element (6) can be fixed to the stop surface (24) or adjacent to the stop surface (24) with a material bond.

10. The axle system according to any one of claims 4 to 9,
wherein a sealing element (8) is provided which can be fixed to the stub element (6) or to the holding element (2) in such a way that it protects the open end of the stub element (6) against environmental influences.

## Revendications

1. Élément formant moignon d'arbre (6) pour l'utilisation dans un système d'essieu,
dans lequel l'élément formant moignon d'arbre (6) comprend une zone de soutien (62), dans lequel l'élément formant moignon d'arbre (6) est réalisé essentiellement à symétrie plane par rapport à deux plans qui se recoupent dans un axe de moignon (S),
dans lequel l'élément formant moignon d'arbre (6) est réalisé, au moins dans la région de la zone de soutien (62), sous forme de corps creux,
dans lequel la zone de soutien (62) présente une longueur de soutien (L) parallèlement à l'axe de moignon (S) qui est plus petite que le diamètre extérieur moyen (D₁) de la zone de soutien (62),
**caractérisé en ce que** l'élément formant moignon d'arbre (6) présente dans la zone de soutien (62) un diamètre intérieur moyen (D₂) qui est de 0,75 à 0,92 fois le diamètre extérieur moyen (D1) de la zone de soutien (62).

2. Élément formant moignon d'arbre (6) selon la revendication 1,
dans lequel la longueur de soutien (L) est dans un rapport de 0,3 à 0,7, de préférence de 0,35 à 0,5 par rapport au diamètre extérieur moyen (D₁) de la zone de soutien (62).

3. Élément formant moignon d'arbre (6) selon la revendication 1 ou 2, dans lequel le diamètre intérieur moyen (D₂) est dans un rapport de 0,85 à 0,9 fois le diamètre extérieur moyen (D₁) de la zone de soutien (62).

4. Système d'essieu, en particulier pour l'utilisation dans un véhicule utilitaire, incluant un élément formant moignon d'arbre (6) et un élément de maintien (2),
dans lequel l'élément formant moignon d'arbre (6) comprend une zone de soutien (62), dans laquelle il est immobilisé ou peut être immobilisé sur une zone de maintien (22) de l'élément de maintien (2),
dans lequel l'élément formant moignon d'arbre (6) est réalisé essentiellement à symétrie plane par rapport à deux plans qui se recoupent dans un axe de moignon (S),
dans lequel l'élément formant moignon d'arbre (6) est réalisé, au moins dans la région de la zone de soutien (62), sous forme de corps creux,
dans lequel le système d'essieu est une suspension de roue individuelle, **caractérisé en ce que** l'élément de maintien (2) est un bras longitudinal oscillant d'un véhicule utilitaire,
lequel est fixé de manière à pouvoir pivoter autour d'une parallèle à l'axe de moignon (S) sur le châssis du véhicule utilitaire,
dans lequel l'élément formant moignon d'arbre (6) présente une longueur de moignon (X) mesurée parallèlement à l'axe de moignon (S),
dans lequel le groupe formé de l'élément de maintien (2) et de l'élément formant moignon d'arbre (6) présente une longueur de système d'essieu (Y) mesurée parallèlement à l'axe de moignon (S),
dans lequel le rapport de la longueur de moignon (X) sur la longueur du système d'essieu (Y) est entre 0,7 et 1,
dans lequel la zone de maintien (22) est réalisée sous forme d'échancrure, dans lequel la zone de soutien (62) est introduite dans la zone de maintien (22) et immobilisée par coopération de matières,
dans lequel l'élément de maintien (2) présente dans la région de la zone de maintien (22) une largeur (B), dans lequel la zone de maintien (62) présente une longueur de soutien (L) parallèlement à l'axe de moignon (S),
dans lequel la longueur de soutien (L) est dans un rapport inférieur ou égal à 0,8 par rapport à la largeur (B).

5. Système d'essieu selon la revendication 4,
dans lequel le rapport de la longueur de moignon (X) sur la longueur du système d'essieu (Y) est entre 0,85 et 1.

6. Système d'essieu selon l'une des revendications 4 ou 5,
dans lequel l'élément de moignon (6) est immobilisé ou susceptible d'être immobilisé sur l'élément de maintien (2) par coopération de matières.

7. Système d'essieu selon la revendication 6,
dans lequel l'élément formant moignon d'arbre (6) est immobilisé sur l'élément de maintien (2) par soudage par friction.

8. Système d'essieu selon l'une des revendications précédentes,
dans lequel la longueur de soutien (L) est dans un rapport de 0,3 à 0,7 par rapport à la largeur (B).

9. Système d'essieu selon l'une des revendications 4 à 8,
dans lequel la zone de maintien (22) comporte une surface de butée (24) qui est conçue pour soutenir l'élément formant moignon d'arbre (6) parallèlement à l'axe de moignon (S),
dans lequel l'élément formant moignon d'arbre (6) est susceptible d'être immobilisé par coopération de matières contre la surface de butée (24) ou de façon adjacente à la surface de butée (24).

10. Système d'essieu selon l'une des revendications 4 à 9,
dans lequel il est prévu un élément d'étanchéité (8) qui peut être immobilisé sur l'élément formant moignon d'arbre (6) ou sur l'élément de maintien (2) de telle façon qu'il protège l'extrémité ouverte de l'élément formant moignon d'arbre (6) vis-à-vis des influences de l'environnement.
